# EUROPEAN PATENT SPECIFICATION

(11) **EP 1 911 989 B1**
(45) Date of publication and mention of the grant of the patent: **01.07.2009**
(21) Application number: 07116820.7
(22) Date of filing: 20.09.2007
(51) Int. Cl.: F16D 55/22

(54) **Disc brake caliper**
Scheibenbremssattel
Etrier de frein à disque

(30) Priority: 13.10.2006 IT MI20061973
(43) Date of publication of application: 16.04.2008
(73) Proprietor: Freni Brembo S.p.A., 24035 Curno (Bergamo) (IT)
(72) Inventor: Veneziano, Aristide, 24040 Stezzano (Bergamo) (IT); Previtali, Alberto, 24030 Palazzago (Bergamo) (IT)
(74) Representative: Crippa, Paolo Ernesto

(56) References cited:
- EP-A- 1 167 804
- EP-A- 1 396 652
- EP-A- 1 548 316
- US-A- 4 540 068
- US-A- 4 632 227

## Description

The present invention relates to a disc brake caliper, and in particular a disc brake caliper suitable for being used on high performance vehicles.

It is known that disc brake calipers are arranged astride of a brake disc and are fixed on the inner side of a vehicle so as to be projecting on the outer side of the vehicle facing the associable wheel. On both sides of the caliper body there are arranged pads that act on braking surfaces of the brake disc, perpendicular to the axis of rotation of the brake disc. Said axis of rotation of the brake disc and of the wheel defines an axial direction. Pads are pushed by pistons, seated in special seats, in abutment against said braking surfaces. The caliper body exhibits a seating window for the pads and for the disc portion influenced by the pads, said window allowing aeration for disposing of the heat generated by the braking.

As known, in high performance vehicles disc brake calipers are subject to considerable stress, both thermal and mechanical.

The deformations of the caliper body in the braking step are essentially due to axial forces exchanged with the pushing pistons of the pads and to tangential forces exchanged between the pads and the braking band of the brake disc.

The axial forces tend to open the caliper body making it take a 'barrel' configuration, while the tangential forces tend to deform the caliper body as a 'parallelogram', a phenomenon known as 'twisting' of the caliper body.

The axial opening of the caliper body tends to decrease the braking sensitivity, the actuating stroke of the brake control being equal.

The twisting is essentially due to the forces transmitted by the pads of the external half caliper due to the arm provided between the reaction point of the braking torque and the caliper body supports.

The deformations of the caliper body, and in particular those of 'twisting', negatively affect the roll-back, that is, the moving back of the pad pushing pistons at the end of the braking step, causing sticking of the pads and relevant abnormal wear.

It is known in the art, in order to oppose the deformations of the caliper body, to use a central bridge that extends astride of the brake disc and perpendicular thereto so as to connect the two half calipers to each other, respectively on the connection side and on the wheel side. Such solutions are known from US-A-4540068 and EP-A-1548316.

Central bridges having large thicknesses, especially in tangential direction, are used in calipers for high performance vehicles. Solutions of central bridges that completely cover the window of seating space of the pads, provided with openings for heat venting, are also known.

Such known solutions imply the use of very cumbersome and heavy central bridges that excessively increase the mass of the caliper body and limit the heat disposal.

The large mass of the caliper body and the poor heat disposal considerably disadvantage the high performance vehicles that require particularly small non suspended masses, for improving the dynamic behaviour of the vehicle, and a high heat disposal capacity of the caliper body to prevent hazardous 'fading' phenomena. The 'fading' essentially consists in a decrease of the braking effect, the brake control stroke being equal, and in extreme cases it can even lead to the inefficiency of the braking system.

In order to solve the problem of the prior art, a central bridge constrained at the half caliper on the support side and free at the half caliper on the external side, has also been used. In this solution, the central bridge receives the tangential forces from the pads and relieves them on the caliper supports so as to prevent relieving the tangential forces on the half caliper on the external side. This solution, however, does not prevent the 'twisting' deformations of the caliper body when the central bridge under the load gets deformed, abutting against the external half caliper. Moreover, the deformation of the central bridge causes a certain delay in the braking response which for a racing vehicle is unacceptable. Moreover, since such bridge is free at a half caliper, it offers no resistance to the axial deformations of the caliper body.

The problem of the present invention is to make a disc brake caliper that should solve the disadvantages mentioned with reference to the prior art.

Such disadvantages are solved by a disc brake caliper according to claim 1. According to a preferred embodiment, the caliper unusually has a totally innovative geometry comprising a bridge element that has a longitudinal prevailing extension that is inclined by an angle relative to an axial direction of the caliper body. Said bridge element ensures a high resistance both to axial deformation and to 'twisting' deformation.

Other embodiments of the disc brake caliper according to the invention are described in the subsequent claims.

Further features and advantages of the present invention will appear more clearly from the following description of a preferred non-limiting embodiment, wherein:

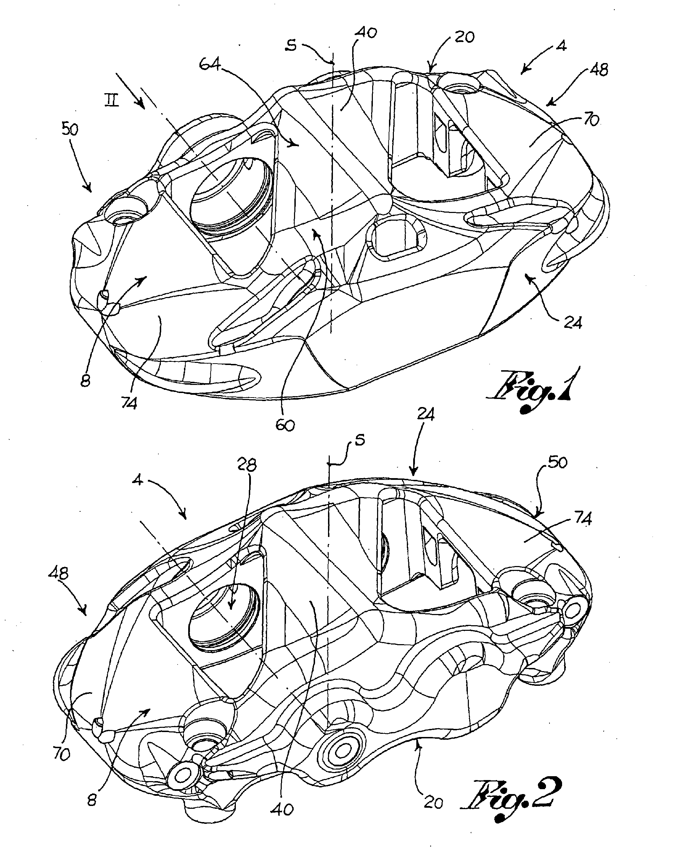

figure 1 shows a perspective view of a caliper according to an embodiment of the present invention;

figure 2 shows a perspective view of the caliper of figure 1, from the side of arrow II of figure 1;

figure 3 shows a plan top view of the caliper of figure 1;

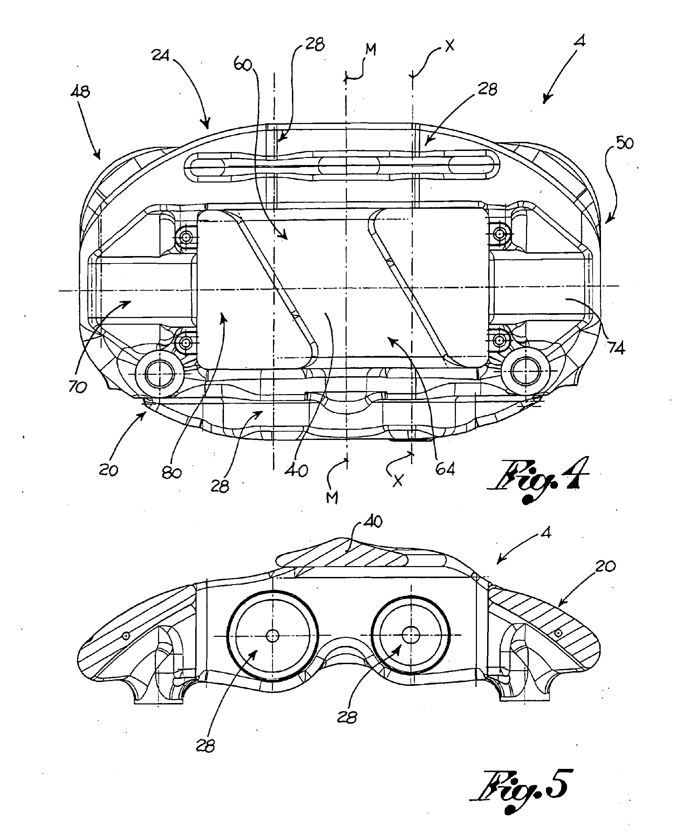

figure 4 shows a plan bottom view of the caliper of figure 1;

figure 5 shows a section view of the caliper of figure 1, along the section line V-V of figure 4;

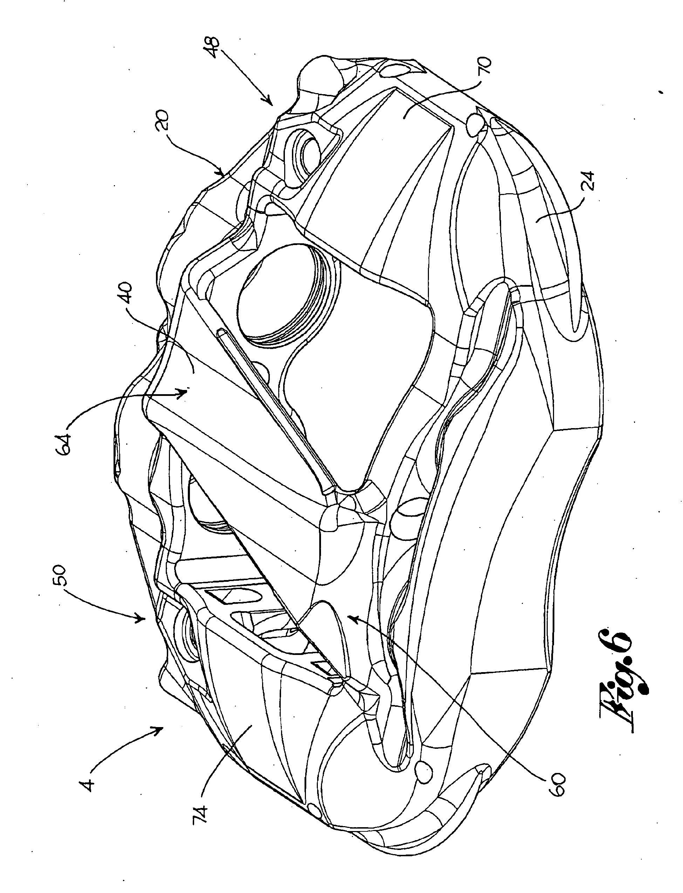

figure 6 shows a perspective view of a caliper according to a further embodiment of the present invention;

figure 7A shows a perspective view of a caliper according to a further embodiment of the present invention;

figure 7B shows a perspective view of a caliper according to a further embodiment of the present invention;

figure 8 shows a perspective view of a caliper according to a further embodiment of the present invention;

figure 9 shows a section view of the caliper of figure 8, relative to the section plane IX-IX of figure 8.

Elements or parts of elements in common between the embodiments described below are referred to with the same reference numerals.

By axial direction it is meant a direction parallel to the axis of rotation of the brake disc and of the relevant wheel.

By radial direction it is meant a direction perpendicular to said axial direction and passing by the axis of rotation of the brake disc.

By tangential direction it is meant a direction perpendicular to the axial direction and to the radial direction.

By directions inclined relative to each other by an angle it is meant the angle formed between two directions defined by any two straight lines or half-lines that represent the average profile of a body having for example a longitudinal extension. The angle for example is evaluated by projecting the two directions on a selected plane. For example, it is possible to use as a reference plane a plane containing an axis arranged along said axial direction, said plane being arranged perpendicular to the disc braking surfaces.

With reference to the above figures, reference numeral 4 generically indicates a disc brake caliper.

The disc brake caliper 4 comprises a caliper body 8 suitable for being fixed to a fixed structure, that is, not rotating of a motor vehicle and suitable for being arranged astride of a disc for disc brake.

Said disc comprises a braking surface on the support side and a braking surface on the wheel side, respectively facing the associable support, for fixing the caliper to the vehicle, and to the associable wheel, integrally constrained in rotation to the disc.

The caliper body 8 comprises a first half caliper on the support side 20 suitable for facing said braking surface on the disc support side and a second half caliper on the wheel side 24 suitable for facing said braking surface on the disc wheel side.

At least one of said half calipers 20, 24 comprises a seat 28 having a prevailing extension that defines an axial direction X-X arranged substantially perpendicular to the surfaces on the support side and on the wheel side of the associable disc.

Said seat 28 is suitable for seating a pushing element suitable for cooperating with a pad for exerting a braking action against said disc surfaces.

The caliper body 8 comprises at least one bridge element 40 suitable for structurally connecting said first and second half caliper 20, 24; in other words, the bridge element mechanically connects the two half calipers to one another so as to oppose resistance to the deformations of the caliper body for example induced by the braking forces exchanged with the brake disc.

Advantageously, said at least one bridge element 40 exhibits a longitudinal prevailing extension and directed along an axis S-S, said prevailing extension axis S-S being inclined by an angle A relative to said axial direction X-X of seat 28 for seating the pushing element.

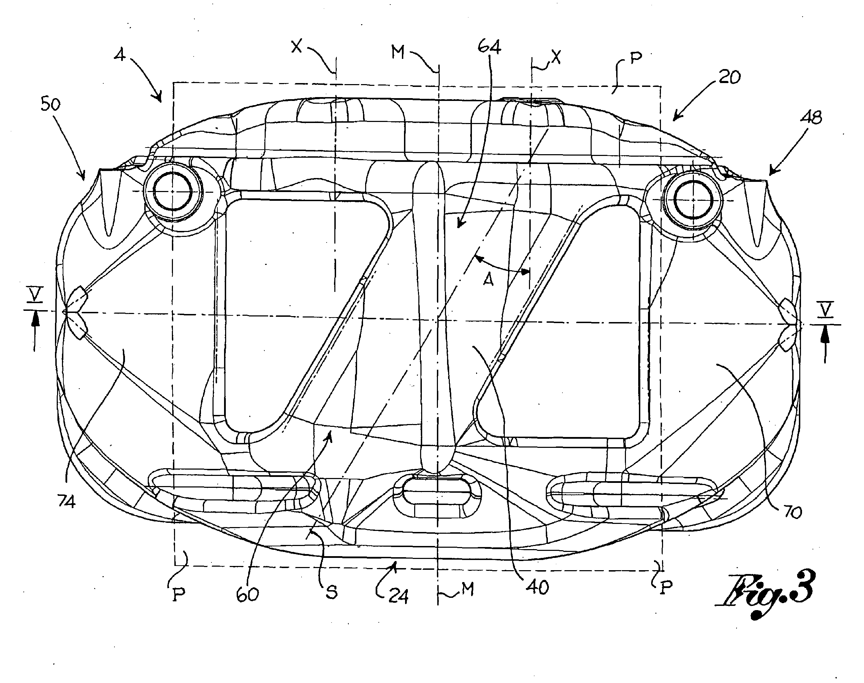

Said angle A may be easily found by projecting the prevailing extension axis S-S and the axial direction relative to a same projection plane 'P', for example selected perpendicular to said braking surfaces on the support side and on the wheel side of the brake disc and also comprising said prevailing extension axis of the caliper (figure 3).

According to an embodiment, said angle A is comprised between 1 and 60 degrees. Preferably, said angle A is comprised between 20 and 40 degrees.

Even more preferably, said angle A is equal to 30 degrees.

According to an embodiment, the caliper body comprises a centre line plane M-M parallel to said axial direction X-X and passing by the axis of rotation of the associable brake disc, said plane dividing the caliper body in an inlet portion 48 and in an outlet portion 50.

The inlet portion 48, during the forward motion of the vehicle, intercepts an inlet portion of the brake disc first, as compared to the outlet portion 50.

The bridge element 40 extends from a first connecting portion 60 to the second half caliper on the wheel side 24 to a second connecting portion 64 to the first half caliper on the support side 20.

According to an embodiment, a first connecting portion 60 of the bridge element 40 to the second half caliper on the wheel side 24 is positioned at said outlet portion 50 of the caliper body.

According to an embodiment, the first connecting portion 60 of the bridge element 40 to the half caliper on the wheel side 24 is positioned at said inlet portion 48 of the caliper body.

According to an embodiment of the present invention, the first connecting portion 60 of the bridge element 40 to the half caliper on the wheel side 24 is positioned at least partly astride of said centre line plane M-M.

According to a further embodiment of the present invention, the first connecting portion 60 of the bridge element 40 to the half caliper on the wheel side 24 and the second connecting portion 64 of the bridge element 40 to the first half caliper on the support side 20 are positioned at opposite inlet 48 and outlet 50 portions of the caliper body 8.

According to a further embodiment, the first connecting portion 60 of the bridge element is positioned on the outlet portion 50 of the caliper and the second connecting portion 64 of the bridge element is positioned on the inlet portion 48 of the caliper.

According to a further embodiment of the present invention, the first connecting portion 60 is positioned on the inlet portion 48 of the caliper and the second connecting portion 64 is positioned on the outlet portion 50 of caliper 4.

According to an embodiment of the present invention, the caliper comprises a first and a second end bridge 70, 74, opposite to one another relative to said pads and respectively arranged at said inlet portion 48 and said outlet portion 50 of the caliper body 8.

The end bridges 70, 74 connect the half calipers 20, 24 to one another, delimiting a seating space 80 for the pads.

According to an embodiment, the first connecting portion 60 of the bridge element 40 is positioned at the first end bridge 70.

According to a further embodiment, the first connecting portion 60 of the bridge element 40 is positioned at said centre line plane M-M of the caliper body 8.

According to a further embodiment of the present invention, the caliper comprises a first and a second bridge element 90, 100, inclined relative to said axial direction and arranged at said inlet 48 and outlet 50 portion of the caliper body 8 respectively. Said caliper comprises said first and second end bridge 70, 74, opposite to one another relative to the pads and respectively arranged at the inlet portion 48 and at the outlet portion 50 of the caliper body 8. The end bridges 70, 74 connect the half calipers 20, 24 to one another, delimiting said seating space 80 for the pads.

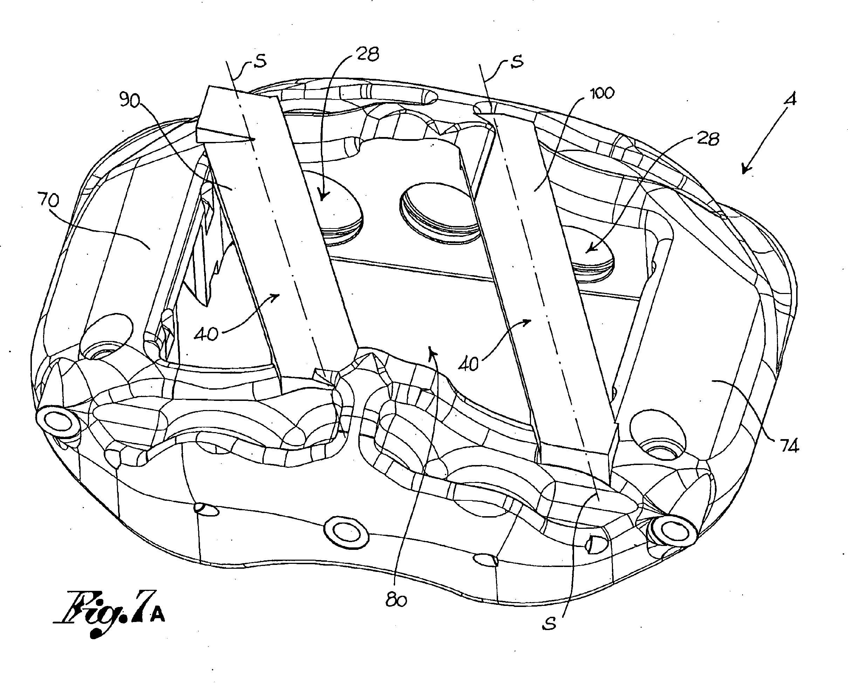

According to an embodiment (figure 7A), said first and second bridge elements 90, 100 are substantially extended according to directions parallel to one another.

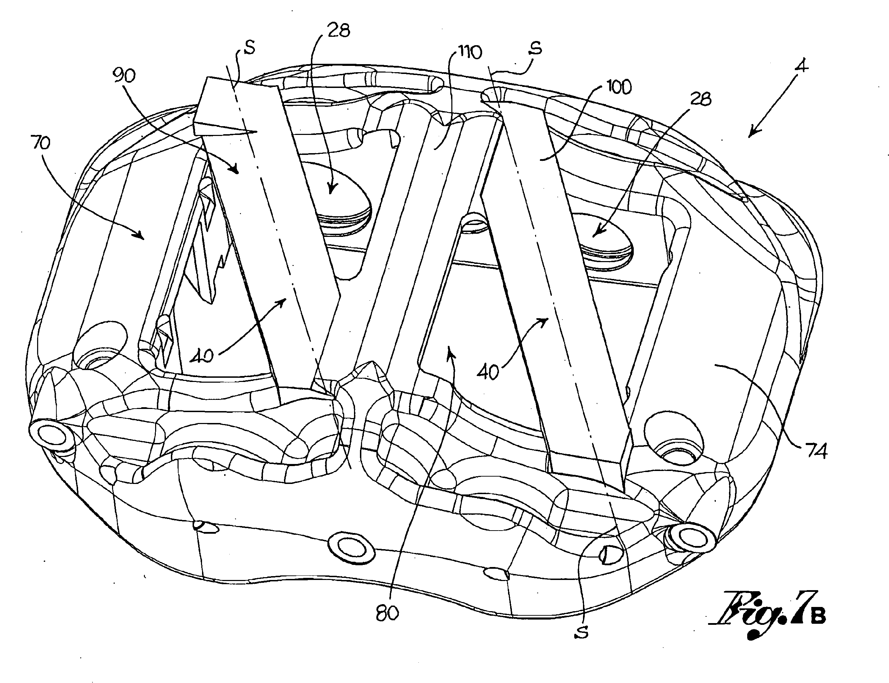

According to an embodiment (figure 7B), the caliper comprises said first and second end bridge 70, 74, opposite to one another relative to the pads and respectively arranged at the inlet portion 48 and at the outlet portion 50 of the caliper body 8. The end bridges 70, 74 connect the half calipers 20, 24 to one another, delimiting said seating space 80 for the pads. A central bridge 110 substantially axially directed and suitable for structurally connecting said first and second half caliper 20, 24, is side by side with said first and second bridge element 90, 100.

According to an embodiment, the bridge element 40 is integral with said first and second half caliper 20, 24 of the caliper body 8.

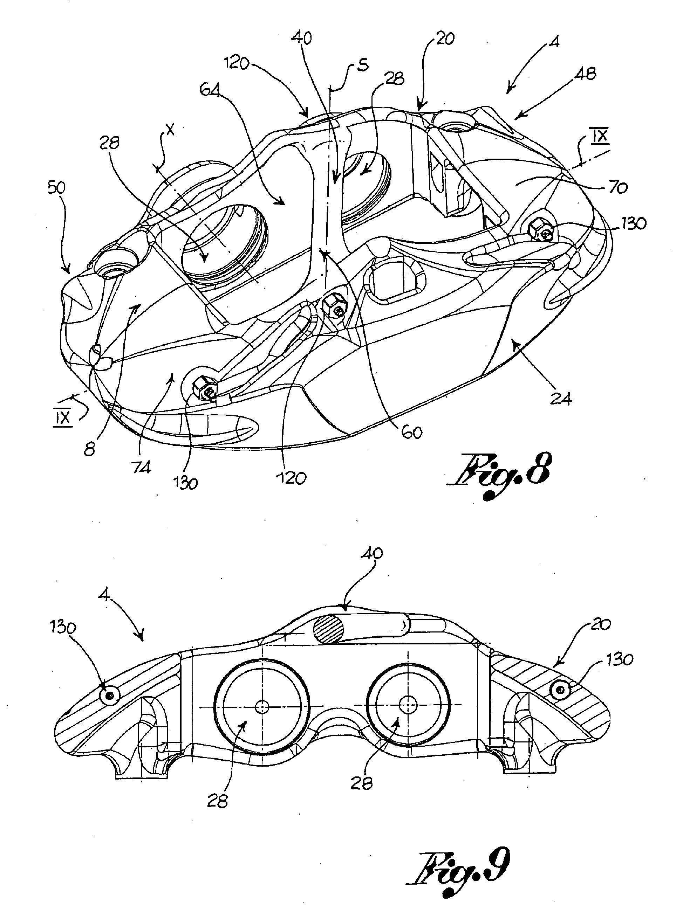

According to a further embodiment, said bridge element 40 is distinct from the caliper body 8 and thus associated to said first and second half caliper 20, 24 by first threaded connecting means 120, according to an upwind element configuration (figures 8-9).

According to a further embodiment, the bridge element 40 comprises a duct passing inside the bridge and suitable for making a fluid connection between said first and second half caliper of the caliper body for the passage of a cooling flow in the caliper body 8.

The caliper according to the present invention may be either fixed or floating.

The caliper according to the present invention may either be in a single block or of the type in two half calipers separate and associated to one another by second threaded connecting means 130.

As we can appreciate from the description, the disc brake caliper of the present invention allows overcoming the disadvantages exhibited by the calipers of the prior art.

Unusually, the present invention proposes a caliper for disc brake having a bridge element arranged according to a prevailing extension direction inclined relative to the axial direction.

The caliper is especially resistant to the tangential forces transmitted by the pads and in particular to the forces transmitted by the pads of the half caliper on the wheel side that have a considerable arm compared to the caliper supports.

The caliper gets deformed in a limited and controlled manner maintaining the geometry of the piston seats and thus ensuring the correct return of the pistons at the end of the pressure exerted by the braking fluid.

The pad wear and the brake are always even also in particularly heavy usage conditions.

The central body exhibits a limited mass while ensuring high stiffness of the caliper body.

The central bridge ensures a wide window to the pad seating space, allowing a high disposal of heat from the caliper body outwards.

During the braking action a part of the tangential force that causes the 'twisting' is relieved on the central body as a tensile or compressive stress, whereas in the prior art bridges such tangential force is relieved as shearing stress. Therefore, the caliper of the present invention provides greater stiffness and resistance to 'twisting' deformations as compared to the prior art calipers while ensuring high resistance to axial deformations.

According to a further embodiment, the central bridge is connected to the half caliper on the wheel side at the piston having the largest section, that is, the piston arranged at the inlet portion of the caliper body. In fact since such piston usually has a larger diameter that the others, the pressure exerted by the brake fluid being equal, it tends to open the caliper body more in the axial direction.

The inclined bridge element is a support to the pads in the radial direction, according to a direction of separation from the associable brake disc.

By inclined bridge it is meant a bridge having a longitudinal direction not parallel to the axial direction.

The provision of two inclined bridge elements allows radially locking the pads outwards; in other words the two bridge elements, arranged in the respective inlet and outlet portions of the caliper body, allow radially constraining the pads for example by the use of retaining springs; this solution is especially advantageous in the case of calipers provided with four pads.

A man skilled in the art may make several changes and adjustments to the calipers described above in order to meet specific and incidental needs, all falling within the scope of protection defined in the following claims.

## Claims

1. Disc brake caliper (4), comprising
- a caliper body (8) suitable for being fixed to a fixed support structure of a motor vehicle and suitable for being arranged astride of a disc for disc brake
- said disc comprising a braking surface on the support side and a braking surface on the wheel side, opposite said braking surface on the support side and facing an associable wheel of the vehicle,
- said caliper body (8) comprising a first half caliper on the support side (20) suitable for facing said braking surface on the disc support side and a second half caliper on the wheel side (24) suitable for facing said braking surface on the disc wheel side.
- at least one of said half calipers (20, 24) comprising a seat (28) having a prevailing extension that defines an axial direction (X-X), said seat (28) being suitable for seating a pushing element suitable for cooperating with a pad for exerting a braking action against said disc surfaces,
- the body (8) comprising at least a bridge element (40) suitable for structurally connecting said first and second half caliper (20, 24),
**characterised in that**
said at least one bridge element (40) defines a substantial longitudinal prevailing extension direction (S-S), said prevailing extension direction (S-S) being inclined by a predetermined angle (A) relative to said axial direction (X-X) of the seat (28) for seating the pushing' element,
said angle (A) being obtained by projecting the prevailing extension direction (S-S) and the axial direction (X-X) relative to a same projection plane (P), said projection plane (P) being perpendicular to said braking surfaces on the support side and on the wheel side of the brake disc and comprising said prevailing extension direction (S-S) of the caliper, said plane (P) being perpendicular to a centre line plane (M) parallel to said axial direction (X-X) and passing by the axis of rotation of the associable brake disc, said centre line plane (M) dividing the caliper body (8) in an inlet portion (48) and in an outlet portion (50), the inlet portion (48) intercepting the brake disc during the forward motion of the vehicle first.

2. Disc brake caliper (4) according to claim 1, wherein said seat (28) has a prevailing extension that defines an axial direction (X-X) arranged substantially perpendicular to the braking surfaces on the support side and on the wheel side of the associable disc.

3. Disc brake caliper (4) according to claim 1 or 2, wherein said angle (A) is determined by the projections of the prevailing extension direction (S-S) and of the axial direction (X-X) relative to a projection plane perpendicular to said braking surfaces on the support side and on the wheel side of the brake disc.

4. Disc brake caliper (4) according to any one of claims 1 to 3, wherein said angle (A) is comprised between 1 and 60 degrees.

5. Disc brake caliper (4) according to any one of the previous claims, wherein said angle (A) is comprised between 20 and 40 degrees.

6. Disc brake caliper (4) according to any one of the previous claims, wherein said angle (A) is equal to 30 degrees.

7. Disc brake caliper (4) according to any one of claims 1 to 6, wherein the caliper body (8) comprises a first connecting portion (60) of the bridge element (40) to the half caliper on the wheel side (24) being positioned at said outlet portion (50).

8. Disc brake caliper (4) according to any one of claims 1 to 6, wherein the caliper body (8) comprises a first connecting portion (60) of the bridge element (40) to the half caliper on the wheel side (24) being positioned at said inlet portion (48).

9. Disc brake caliper (4) according to any one of claims 1 to 8, wherein the caliper body (8) comprises a first connecting portion (60) of the bridge element (40) to the half caliper on the wheel side (24) being positioned at least partly astride of said centre line plane (M).

10. Disc brake caliper (4) according to any one of claims 1 to 9, wherein the caliper body (8) comprises a first connecting portion (60) of the bridge element (40) to the half caliper on the wheel side (24) and a second connecting portion (64) of the bridge element (40) to the half caliper on the support side (20) being positioned at opposite inlet and outlet portions (48, 50) of the caliper body (8).

11. Disc brake caliper (4) according to claim 10, wherein said first connecting portion (60) of the bridge element (40) to the half caliper on the wheel side (24) is positioned on the outlet portion (50) of the caliper body (8) and said second connecting portion (64) of the bridge element (40) to the half caliper on the support side (20) is positioned on the inlet portion (48) of the caliper body (8).

12. Disc brake caliper (4) according to claim 10, wherein said first connecting portion (60) of the bridge element (40) to the half caliper on the wheel side (24) is positioned on the inlet portion (48) of the caliper body (8) and said second connecting portion (64) of the bridge element (40) to the half caliper on the support side (20) is positioned on the outlet portion (50) of the caliper body.

13. Disc brake caliper (4) according to any one of the previous claims, comprising a first and a second end bridge (70, 74), opposite to one another relative to said pads and respectively arranged at said inlet portion (48) and at said outlet portion (50) of the caliper body (8), said end bridges (70, 74) connecting the half calipers (20, 24) to one another and therewith delimiting a seating space (80) for the pads, wherein the first connecting portion (60) of the bridge element (40) to the half caliper on the wheel side.(24) is positioned at the first end bridge (74).

14. Disc brake caliper (4) according to claim 13, wherein the second connecting portion (64) of the bridge element (40) to the half caliper on the support side (20) is positioned at the second end bridge (74).

15. Disc brake caliper (4) according to claim 13, wherein the second connecting portion (64) of the bridge element (40) to the half caliper on the support side (20) is positioned at said centre line plane (M) of the caliper body (8).

16. Disc brake caliper (4) according to any one of claims 1 to 12, comprising a first and a second end bridge (70, 74), opposite to one another relative to said pads and respectively arranged at said inlet portion (48) and at said outlet portion (50) of the caliper body (8), said end bridges connecting the half calipers (20, 24) to one another and therewith delimiting a seating space (80) for the pads, wherein the first connecting portion (60) of the bridge element (40) to the half caliper on the wheel side (24) is positioned at the second end bridge (74).

17. Disc brake caliper (4) according to claim 16, wherein the second connecting portion (64) of the bridge element (40) to the half caliper on the support side (20) is positioned at the first end bridge (70).

18. Disc brake caliper (4) according to claim 16, wherein the second connecting portion (64) of the bridge element (40) to the half caliper on the support side (20) is positioned at said centre line plane (M) of the caliper body (8).

19. Disc brake caliper (4) according to any one of claims 13 to 18, comprising a first and a second inclined bridge element (90, 100) arranged at said inlet (48) and outlet (50) portion of the caliper body (8) respectively.

20. Disc brake caliper (4) according to claim 19, wherein said first and second inclined bridge elements (90, 100) are substantially extended according to directions parallel to one another.

21. Disc brake caliper (4) according to any one of the previous claims, wherein said caliper body (8) comprises a central bridge (110) substantially axially directed that structurally connects said first and second half caliper (20, 24).

22. Disc brake caliper (4) according to any one of the previous claims, wherein said at least one inclined bridge element (40) is in a single block with said first and second half caliper (20, 24).

23. Disc brake caliper (4) according to any one of claims 1 to 21, wherein said bridge element (40) is associated to said first and second half caliper (20, 24) of the caliper body (8) by first threaded connecting means (120) according to an upwind element configuration.

24. Disc brake caliper (4) according to any one of the previous claims, wherein said bridge element (40) comprises a duct passing inside the bridge and suitable for making a fluid connection between said first and second half caliper (20, 24) for the passage of a cooling flow in the caliper body (8).

25. Disc brake caliper (4) according to any one of the previous claims, wherein said caliper is fixed.

26. Disc brake caliper (4) according to any one of claims 1 to 24, wherein said caliper is floating.

27. Disc brake caliper (4) according to any one of the previous claims, wherein said caliper is in a single block.

28. Disc brake caliper (4) according to any one of claims 1 to 26, wherein said caliper is made in two half calipers (20, .24) associated to one another by second threaded connecting means (130).

29. Disc brake comprising a caliper according to any one of the previous claims.

## Patentansprüche

1. Scheibenbremssattel (4) umfassend
einen Bremssattelkörper (8), der zur Befestigung an einer festen Abstützan-ordnung eines Kraftfahrzeugs und geeignet ist, rittlings einer Scheibe für eine Scheibenbremse angeordnet zu werden, wobei
die Scheibe eine Bremsfläche an der Abstützseite und eine Bremsfläche an der Radseite, die entgegengesetzt zu der Bremsfläche an der Abstützseite ange-ordnet und einem zugehörigen Rad des Fahrzeugs zugewandt ist, umfasst,
der Bremssattelkörper (8) eine erste Bremssattelhälfte an der Abstützseite (20), die geeignet ist, der Bremsfläche an der Scheibenabstützseite zugewandt zu sein und eine zweite Bremssattelhälfte an der Radseite (24), die geeignet ist, der Bremsfläche der Scheibenradseite zugewandt zu sein, umfasst,
wenigstens eine der Bremssattelhälften (20, 24) einen Sitz (28) umfasst, der eine vorrangige Erstreckung aufweist, die eine Axialrichtung (X-X) definiert, wobei der Sitz (28) zur Aufnahme eines Schubelements geeignet ist, das zum Zusammenwirken mit einem Bremsklotz zum Ausüben einer Bremswirkung gegen die Scheibenoberflächen geeignet ist,
der Körper (8) wenigstens ein Brückenelement (4) umfasst, das zur baulichen Verbindung der ersten mit der zweiten Bremssattelhälfte (20, 24) geeignet ist,
**dadurch gekennzeichnet,**
**dass** das wenigstens eine Brückenelement (40) eine vorrangig längs verlau-fende Erstreckungsrichtung (S-S) definiert und die vorrangige Erstreckungs-richtung (S-S) mit einem vorbestimmten Winkel (A) relativ zu der Axialrichtung (X-X) des Sitzes (28) zum Aufnehmen des Schubelements schräg verläuft,
**dass** der Winkel durch Projektion der vorrangigen Erstreckungsrichtung (S-S) und der Axialrichtung (X-X) relativ zu einer gleichen Projektionsebene (P) er-zielt wird, wobei sich die Projektionsebene (P) rechtwinklig zu den Bremsflä-chen an der Abstützseite und an der Radseite der Bremsscheibe erstreckt und die vorrangige Erstreckungsrichtung (S-S) des Bremssattels enthält, wobei die Ebene (P) rechtwinklig zu einer Mittellinienebene (M) parallel zu der Axialrich-tung (X-X) angeordnet ist und die Rotationsachse der zugehörigen Brems-scheibe passiert, wobei die Mittellinienebene (M) den Bremssattelkörper (8) in einen Einlassabschnitt (48) und einen Auslassabschnitt (50) teilt und der Einlassabschnitt (48) die Bremsscheibe während der Vorwärtsbewegung des Fahrzeugs zuerst abfängt.

2. Scheibenbremssattel (4) gemäß Anspruch 1, wobei der Sitz (28) eine vorrangi-ge Erstreckung aufweist, die eine Axialrichtung (X-X) definiert, die im Wesentli-chen rechtwinklig zu den Bremsflächen an der Abstützseite und an der Radsei-te der zugehörigen Scheibe angeordnet ist.

3. Scheibenbremssattel (4) gemäß Anspruch 1 oder 2, wobei der Winkel (A) durch die Projektion der vorrangigen Erstreckungsrichtung (S-S) und der Axial-richtung (X-X) relativ zu einer Projektionsebene bestimmt ist, die rechtwinklig zu den Bremsflächen an der Abstützseite und an der Radseite der Brems-scheibe verläuft.

4. Scheibenbremssattel (4) gemäß einem der Ansprüche 1 bis 3, wobei der Win-kel (A) zwischen 1° und 60° beträgt.

5. Scheibenbremssattel (4) gemäß einem der vorangehenden Ansprüche, wobei der Winkel (A) zwischen 20° und 40° beträgt.

6. Scheibenbremssattel (4) gemäß einem der vorangehenden Ansprüche, wobei der Winkel (A) gleich 30° ist.

7. Scheibenbremssattel (4) gemäß einem der Ansprüche 1 bis 6, wobei der Bremssattelkörper (8) einen ersten Verbindungsabschnitt (60) des Brücken-elements (40) mit der Bremssattelhälfte an der Radseite (24) umfasst, der an dem Auslassabschnitt (50) angeordnet ist.

8. Scheibenbremssattel (4) gemäß einem der Ansprüche 1 bis 6, wobei der Bremssattelkörper (8) einen ersten Verbindungsabschnitt (60) des Brücken-elements (40) zu der Bremssattelhälfte an der Radseite (24) umfasst, der an dem Einlassabschnitt (48) angeordnet ist.

9. Scheibenbremssattel (4) gemäß einem der Ansprüche 1 bis 8, wobei der Bremssattelkörper (8) einen ersten Verbindungsabschnitt (60) des Brücken-elements (40) zu der Bremssattelhälfte an der Radseite (24) umfasst, der zu-mindest teilweise rittlings der Mittellinienebene (M) angeordnet ist.

10. Scheibenbremssattel (4) gemäß einem der Ansprüche 1 bis 9, wobei der Bremssattelkörper (8) einen ersten Verbindungsabschnitt (60) des Brücken-elements (40) zu der Bremssattelhälfte an der Radseite (24) und einen zweiten Verbindungsabschnitt (64) des Brückenelements (40) zu der Bremssattelhälfte an der Abstützseite (20) umfasst, die an entgegengesetzten Einlass- und Auslassabschnitten (48, 50) des Bremssattelkörpers (8) angeordnet sind.

11. Scheibenbremssattel (4) gemäß Anspruch 10, wobei der erste Verbindungsab-schnitt (60) des Brückenelements (40) zu der Bremssattelhälfte an der Radsei-te (24) an dem Auslassabschnitt (50) des Bremssattelkörpers (8) angeordnet ist und der zweite Verbindungsabschnitt (64) des Brückenelements (40) zu der Bremssattelhälfte an der Abstützseite (20) an dem Einlassabschnitt (48) des Bremssattelkörpers (8), angeordnet ist.

12. Scheibenbremssattel (4) gemäß Anspruch 10, wobei der erste Verbindungsab-schnitt (6) des Brückenelements (40) zu der Bremssattelhälfte an der Radseite (24) an dem Einlassabschnitt (48) des Bremssattelkörpers (8) angeordnet ist und der zweite Verbindungsabschnitt (64) des Brückenelements (40) zu der Bremssattelhälfte an der Abstützseite (20) an dem Auslassabschnitt (50) des Bremssattelkörpers angeordnet ist.

13. Scheibenbremssattel (4) gemäß einem der vorangehenden Ansprüche umfas-send eine erste und zweite Endbrücke (70, 74), die entgegengesetzt zueinan-der relativ zu den Bremsklötzen und jeweils an dem Einlassabschnitt (48) und dem Auslassabschnitt (50) des Bremssattelkörpers (8) angeordnet sind, wobei die Endbrücken (70, 74) die Bremssattelhälften (20, 24) miteinander verbinden und **dadurch** einen Sitzfreiraum (80) für die Bremsklötze begrenzen, und wobei der erste Verbindungsabschnitt (60) des Brückenelements (40) zu der Brems-sattelhälfte an der Radseite (24) an der ersten Endbrücke (74) angeordnet ist.

14. Scheibenbremssattel (4) gemäß Anspruch 13, wobei der zweite Verbindungs-abschnitt (64) des Brückenelements (40) zu der Bremssattelhälfte an der Ab-stützseite (20) an der zweiten Endbrücke (74) angeordnet ist.

15. Scheibenbremssattel (4) gemäß Anspruch 13, wobei der zweite Verbindungs-abschnitt (64) des Brückenelements (40) zu der Bremssattelhälfte an der Ab-stützseite (20) in der Mittellinienebene (M) des Bremssattelkörpers (8) ange-ordnet ist.

16. Scheibenbremssattel (4) gemäß einem der Ansprüche 1 bis 12 umfassend eine erste und eine zweite Endbrücke (70, 74), die entgegengesetzt zueinander re-lativ zu den Bremsklötzen und an dem Einlassabschnitt (48) beziehungsweise an dem Auslassabschnitt (50) des Bremssattelkörpers (8) angeordnet sind, wobei die Endbrücken die Bremssattelhälften (20, 24) miteinander verbinden und **dadurch** einen Sitzfreiraum (80) für die Bremsklötze begrenzen, und wobei der erste Verbindungsabschnitt (60) des Brückenelements (4) zu der Brems-sattelhälfte an der Radseite (24) an der zweiten Endbrücke (74) angeordnet ist.

17. Scheibenbremssattel (4) gemäß Anspruch 16, wobei der zweite Verbindungs-abschnitt (64) des Brückenelements (40) zu der Bremssattelhälfte an der Ab-stützseite (20) an der ersten Endbrücke (70) angeordnet ist.

18. Scheibenbremssattel (4) gemäß Anspruch 16, wobei der zweite Verbindungs-abschnitt (64) des Brückenelements (40) zu der Bremssattelhälfte an der Ab-stützseite (20) in der Mittellinienebene (M) des Bremssattelkörpers (8) ange-ordnet ist.

19. Scheibenbremssattel (4) gemäß einem der Ansprüche 13 bis 18 umfassend ein erstes und ein zweites Schrägbrückenelement (90, 100), die an dem Einlassabschnitt (48) beziehungsweise dem Auslassabschnitt (50) des Bremssattel-körpers (8) angeordnet sind.

20. Scheibenbremssattel (4) gemäß Anspruch 19, wobei das erste und das zweite Schrägbrückenelement (90, 100) sich im Wesentlichen entsprechend zueinan-der parallelen Richtungen erstrecken.

21. Scheibenbremssattel (4) gemäß einem der vorangehenden Ansprüche, wobei der Bremssattelkörper (8) eine zentrale Brücke (110) umfasst, die sich im We-sentlichen axial erstreckt und die erste und die zweite Bremssattelhälfte (20, 24) baulich miteinander verbindet.

22. Scheibenbremssattel (4) gemäß einem der vorangehenden Ansprüche, wobei das wenigstens eine Schrägbrückenelement (40) einstückig mit der ersten und der zweiten Bremssattelhälfte (20, 24) ausgebildet ist.

23. Scheibenbremssattel (4) gemäß einem der Ansprüche 1 bis 21, wobei das Brückenelement (40) mit der ersten und der zweiten Bremssattelhälfte (20, 24) des Bremssattelkörpers (8) durch erste Gewindeverbindungsmittel (120) ge-mäß einer "Upwind"-Element-Anordnung verbunden ist.

24. Scheibenbremssattel (4) gemäß einem der vorangehenden Ansprüche, wobei das Brückenelement (40) einen Leitungskanal umfasst, der durch die Brücke hindurch verlaufend ausgebildet ist und zur Bereitstellung einer Flüssigkeits-verbindung zwischen der ersten und der zweiten Bremssattelhälfte (20, 24) für die Durchleitung eines Kühlstroms in den Bremssattelkörper (8) geeignet ist.

25. Scheibenbremssattel (4) gemäß einem der vorangehenden Ansprüche, wobei der Bremssattel ortsfest angebracht ist.

26. Scheibenbremssattel (4) gemäß einem der Ansprüche 1 bis 24, wobei der Bremssattel schwimmend angeordnet ist.

27. Scheibenbremssattel (4) gemäß einem der vorangehenden Ansprüche, wobei der Bremssattel einen einstückigen Block darstellt.

28. Scheibenbremssattel (4) gemäß einem der Ansprüche 1 bis 26, wobei der Bremssattel aus zwei Bremssattelhälften (20, 24) gebildet ist, die durch zweite Gewindeverbindungsmittel (130) miteinander verbunden sind.

29. Scheibenbremse umfassend einen Bremssattel gemäß irgend einem der vo-rangehenden Ansprüche.

## Revendications

1. Etrier de frein à disque (4) comprenant :
- un corps d'étrier (8) destiné à être fixé sur une structure de support fixe d'un véhicule à moteur et destiné à être agencé à cheval sur un disque pour frein à disque,
- ledit disque comprenant une surface de freinage du côté support et une surface de freinage du côté roue, opposée à ladite surface de freinage du côté support et faisant face à une roue pouvant être associée au véhicule,
- ledit corps d'étrier (8) comprenant un premier demi-étrier du côté support (20) destiné à faire face à ladite surface de freinage du côté support du disque et un second demi-étrier du côté roue (24) destiné à faire face à ladite surface de freinage du côté roue du disque,
- au moins l'un desdits demi-étriers (20, 24) comprenant une portée (28) ayant une extension prédominante qui définit une direction axiale (X-X), ladite portée (28) étant destinée à recevoir un élément de poussée destiné à coopérer avec une plaquette pour exercer une action de freinage contre lesdites surfaces du disque,
- le corps (8) comprenant au moins un élément à pont (40) destiné à relier structurellement lesdits premier et second demi-étriers (20,24),
**caractérisé en ce que**
ledit au moins élément à pont (40) définit une direction d'extension prédominante sensiblement longitudinale (S-S), ladite direction d'extension prédominante (S-S) étant inclinée d'un angle prédéterminé (A) par rapport à ladite direction axiale (X-X) de la portée (28) pour recevoir l'élément de poussée,
ledit angle (A) étant obtenu en projetant la direction d'extension prédominante (S-S) et la direction axiale (X-X) par rapport à un même plan de projection (P), ledit plan de projection (P) étant perpendiculaire auxdites surfaces de freinage du côté support et du côté roue du frein à disque et comprenant ladite direction d'extension prédominante (S-S) de l'étrier, ledit plan (P) étant perpendiculaire à un plan médian (M) parallèle à ladite direction axiale (X-X) et passant par l'axe de rotation du disque de frein associable, ledit plan médian (M) divisant le corps de l'étrier (8) en une partie d'entrée (48) et en une partie de sortie (50), la partie d'entrée (48) interceptant le disque de frein durant le mouvement d'avance du véhicule.

2. Etrier de frein à disque (4) selon la revendication 1, dans lequel ladite portée (28) présente une extension prédominante qui définit une direction axiale (X-X) agencée sensiblement perpendiculairement aux surfaces de freinage du côté support et du côté roue du disque associable.

3. Etrier de frein à disque (4) selon la revendication 1 ou 2, dans lequel ledit angle (A) est déterminé par les projections de la direction d'extension prédominante (S-S) et de la direction axiale (X-X) par rapport à un plan de projection perpendiculaire auxdites surfaces de freinage du côté support et du côté roue du disque de frein.

4. Etrier de frein à disque (4) selon une quelconque des revendications 1 à 3, dans lequel ledit angle (A) est compris entre 1 et 60 degrés.

5. Etrier de frein à disque (4) selon une quelconque des revendications précédentes, dans lequel ledit angle (A) est compris entre 20 et 40 degrés.

6. Etrier de frein à disque (4) selon une quelconque des revendications précédentes, dans lequel ledit angle (A) est égal à 30 degrés.

7. Etrier de frein à disque (4) selon une quelconque des revendications 1 à 6, dans lequel le corps d'étrier (8) comprend une première partie de liaison (60) de l'élément à pont (40) au demi-étrier du côté roue (24) qui est positionnée au niveau de ladite partie de sortie (50).

8. Etrier de frein à disque (4) selon une quelconque des revendications 1 à 6, dans lequel le corps d'étrier (8) comprend une première partie de liaison (60) de l'élément à pont (40) au demi-étrier du côté roue (24) qui est positionnée au niveau de ladite partie d'entrée (48).

9. Etrier de frein à disque (4) selon une quelconque des revendications 1 à 8, dans lequel le corps d'étrier (8) comprend une première partie de liaison (60) de l'élément à pont (40) au demi-étrier du côté roue (24) qui est positionnée au moins partiellement à cheval audit plan médian (M).

10. Etrier de frein à disque (4) selon une quelconque des revendications 1 à 9, dans lequel le corps d'étrier (8) comprend une première partie de liaison (60) de l'élément à pont (40) au demi-étrier du côté roue (24) et une seconde partie de liaison (64) de l'élément à pont (40) au demi-étrier du côté support (20) qui sont positionnées au niveau des parties d'entrée et de sortie opposées (48, 50) du corps d'étrier (8).

11. Etrier de frein à disque (4) selon la revendication 10, dans lequel ladite première partie de liaison (60) de l'élément à pont (40) au demi-étrier du côté roue (24) est positionnée sur la partie de sortie (50) du corps d'étrier (8) et ladite seconde partie de liaison (64) de l'élément à pont (40) au demi-étrier du côté support (20) est positionnée sur la partie d'entrée (48) du corps d'étrier (8).

12. Etrier de frein à disque (4) selon la revendication 10, dans lequel ladite première partie de liaison (60) de l'élément à pont (40) au demi-étrier du côté roue (24) est positionnée sur la partie d'entrée (48) du corps d'étrier (8) et ladite seconde partie de liaison (64) de l'élément à pont (40) au demi-étrier du côté support (20) est positionnée sur la partie de sortie (50) du corps d'étrier.

13. Etrier de frein à disque (4) selon une quelconque des revendications précédentes, comprenant des premier et second ponts d'extrémité (70, 74), opposés l'un à l'autre par rapport auxdites plaquettes et respectivement agencés au niveau de ladite partie d'entrée (48) et au niveau de ladite partie de sortie (50) du corps d'étrier (8), lesdits ponts d'extrémité (70, 74) reliant les demi-étriers (20, 24) l'un à l'autre et délimitant avec ceux-ci un espace de réception (80) pour les plaquettes, dans lequel la première partie de liaison (60) de l'élément à pont (40) au demi-étrier du côté roue (24) est positionnée au niveau du premier pont d'extrémité (70).

14. Etrier de frein à disque (4) selon la revendication 13, dans lequel la seconde partie de liaison (64) de l'élément à pont (40) au demi-étrier du côté support (20) est positionnée au niveau du second pont d'extrémité (74).

15. Etrier de frein à disque (4) selon la revendication 13, dans lequel la seconde partie de liaison (64) de l'élément à pont (40) au demi-étrier du côté support (20) est positionnée au niveau dudit plan médian (M) du corps d'étrier (8).

16. Etrier de frein à disque (4) selon une quelconque des revendications 1 à 12, comprenant des premier et second ponts d'extrémité (70, 74), opposés l'un à l'autre par rapport auxdites plaquettes et respectivement agencés au niveau de ladite partie d'entrée (48) et au niveau de ladite partie de sortie (50) du corps d'étrier (8), lesdits ponts d'extrémité reliant les demi-étriers (20, 24) l'un à l'autre et délimitant avec ceux-ci un espace de réception (80) pour les plaquettes, dans lequel la première partie de liaison (60) de l'élément à pont (40) au demi-étrier du côté roue (24) est positionnée au niveau du second pont d'extrémité (74).

17. Etrier de frein à disque (4) selon la revendication 16, dans lequel la seconde partie de liaison (64) de l'élément à pont (40) au demi-étrier du côté support (20) est positionnée au niveau du premier pont d'extrémité (70).

18. Etrier de frein à disque (4) selon la revendication 16, dans lequel la seconde partie de liaison (64) de l'élément à pont (40) au demi-étrier du côté support (20) est positionnée au niveau dudit plan médian (M) du corps d'étrier (8).

19. Etrier de frein à disque (4) selon une quelconque des revendications 13 à 18, comprenant des premier et second éléments à ponts inclinés (90, 100) agencés au niveau de ladite partie d'entrée (48) et de ladite partie de sortie (50) du corps d'étrier (8), respectivement.

20. Etrier de frein à disque (4) selon la revendication 19, dans lequel lesdits premier et second éléments à ponts inclinés (90, 100) s'éten-dent sensiblement selon des directions parallèles l'une à l'autre.

21. Etrier de frein à disque (4) selon une quelconque des revendications précédentes, dans lequel ledit corps d'étrier (8) comprend un pont central (110) sensiblement dirigé axialement qui relie structurellement lesdits premier et second demi-étriers (20, 24).

22. Etrier de frein à disque (4) selon une quelconque des revendications précédentes, dans lequel ledit au moins un élément à pont incliné (40) est en un seul bloc avec lesdits premier et second demi-étriers (20, 24).

23. Etrier de frein à disque (4) selon une quelconque des revendications 1 à 21, dans lequel ledit élément à pont incliné (40) est associé auxdits premier et second demi-étriers (20, 24) du corps d'étrier (8) par des premiers moyens de liaison filetés (120) selon une configuration d'élé-ment face au vent.

24. Etrier de frein à disque (4) selon une quelconque des revendications précédentes, dans lequel ledit élément à pont (40) comprend un conduit passant à l'intérieur du pont et destiné à réaliser une liaison fluide entre lesdits premier et second demi-étriers (20, 24) pour le passage d'un écoulement de refroidissement dans le corps d'étrier (8).

25. Etrier de frein à disque (4) selon une quelconque des revendications précédentes, dans lequel ledit étrier est fixe.

26. Etrier de frein à disque (4) selon une quelconque des revendications 1 à 24, dans lequel ledit étrier est flottant.

27. Etrier de frein à disque (4) selon une quelconque des revendications précédentes, dans lequel ledit étrier est en un bloc unique.

28. Etrier de frein à disque (4) selon une quelconque des revendications 1 à 26, dans lequel ledit étrier est réalisé en deux demi-étriers (20, 24) associés l'un à l'autre par de seconds moyens de liaison filetés (130).

29. Frein à disque comprenant un étrier selon une quelconque des revendications précédentes.
